# EUROPEAN PATENT APPLICATION

(11) **EP 2 982 248 A1**
(43) Date of publication of application: **10.02.2016**
(21) Application number: 14180129.0
(22) Date of filing: 07.08.2014
(51) Int. Cl.: A21D 2/36, A21D 2/18, A21D 13/08, A21D 13/06

(54) **Soft cookie**

(71) Applicant: Fuji Oil Company, Limited, Izumisano-shi Osaka 598-8540 (JP)
(72) Inventor: Sakamoto, Mai, Tsukubamirai-shi, Ibaraki 300-2497 (JP); Kiyama, Tsukasa, Tsukubamirai-shi, Ibaraki 300-2497 (JP)
(74) Representative: Matthews, Derek Peter

(57) **Abstract**

The invention provides a soft cookie comprising a mung bean protein and a sugar alcohol, wherein the mung bean protein content is 8 to 29 wt% of the total solid content.

## Description

### Technical Field

The present invention relates to a soft cookie.

### Background of the Invention

Baked confectioneries that require a baking step include types with a crisp hard mouthfeel, such as cracker, hard biscuits and ordinary cookies, and types with a fluffy, soft mouthfeel, such as sponge cake and muffins, produced by incorporating air into the dough. The differences in mouthfeel are attributed to how air is incorporated into the dough, and to the moisture content in baked confectioneries after baking. The aforementioned baked confectioneries after baking usually have moisture contents of less than 5 wt% of the total confectionery in the case of cookies, or greater than 30 wt% in the case of cakes such as sponge cakes.

In recent years in the food industry, with changes in consumer preferences and increasing numbers of elderly people, products with a softer, more palatable mouthfeel have become desirable, and baked confectioneries that require baking steps for preparation are no exception. However, the aforementioned cookie products have a hard crispy mouthfeel instead of a soft mouthfeel. Even cakes that have a soft mouthfeel can still harden and deteriorate in quality when time passes after baking. Consequently, there is a demand for baked confectioneries having both a soft mouthfeel and excellent preservability.

In light of this situation in the food industry, there is increasing interest in soft cookies that have a soft mouthfeel while also having relatively long preservability. Soft cookies are mainly considered to be confectioneries classified as "moderately moist", having a moisture content of about 5 to 30 wt%, and it is known that they exhibit a moist soft mouthfeel despite being cookies, and differ from common crisp cookies.

Conventionally, methods have been employed in which water or liquefied sugar such as starch syrup is added in large quantities to dough to produce soft cookies, thereby increasing the moisture content after baking to obtain a soft mouthfeel. Another method known for obtaining a soft mouthfeel, for example, is addition of pregelatinized processed starch to bakery products (see JP 2007-325526).

Mung bean (*Vigna radiata* seed) has long been used in the past as a food or food starting material, primarily in India, China and Southeast Asia regions. Mung bean sprouts obtained by germinating mung bean as bean sprouts, or mung bean-derived starch as a starting material for bean starch vermicelli, are widely consumed around the world at the current time, while also being a bean type known to have a very rich history of consumption as a food. In addition, mung bean has also traditionally been used as an herbal remedy in China for its high antipyretic and detoxication effects.

US Patent No. 4111927 discloses the addition of mung bean protein extracted from mung bean to sugar cookies. Sugar cookies have a hard mouthfeel, usually with a moisture content of less than 5%, and thus generally differ from soft cookies that have a soft mouthfeel.

### SUMMARY OF THE INVENTION

When soft cookies are prepared with addition of large quantities of water or liquefied sugar such as starch syrup to the dough to obtain a soft mouthfeel, the soft dough has led to the problem of poor manageability. Another problem has been that it is hard to cook enough the interior of these cookies, tending to leave that region half-baked. Furthermore, a large quantity of moisture after baking results in higher water activity and promotes proliferation of microorganisms, causing the major problem of a reduced consumable life at ordinary temperature and thus poor preservability.

Because sugar alcohols such as liquid sorbitol and maltitol have lower water activity values than sucrose and starch syrup, they can be considered materials suitable for preparing baked confectioneries not only with a moist mouthfeel but also with satisfactory preservability. However, even when using sugar alcohol to impart a moist and soft mouthfeel to baked confectioneries, it is necessary to add high amounts of sugar alcohol to the dough. With conventional soft cookies, this can lead to the problem of slackening of the dough after baking.

The moist mouthfeel obtained by adding processed starch by the method described in JP 2007-325526 has a glutinous poorly chewable mouthfeel derived from the amylopectin in starch, and therefore further improvement in mouthfeel is desired.

Wheat flour is also used in conventional soft cookies, but many patients suffer from wheat allergy in recent years. There is a desire for soft cookies having a moist mouthfeel, without containing wheat flour or wheat materials such as gluten.

Although the literature contains examples of mung bean protein extracted from mung bean, it is still not widely used for foods. US Patent No. 4111927 mentions the use of mung bean protein in sugar cookie dough for increased expansion of the dough during baking, but mentions nothing regarding the effects on mouthfeel.

It is an object of the present invention to obtain a soft cookie with a soft mouthfeel and satisfactory chewability.

As a result of much diligent research on this topic, the present inventors have completed this invention upon finding that a soft cookie with a soft mouthfeel and satisfactory chewability can be obtained by adding mung bean protein and a sugar alcohol.

The invention provides a soft cookie comprising a mung bean protein and a sugar alcohol. The content of the mung bean protein in the total solid content of the soft cookie is 8 to 29 wt%.

When the soft cookie of the invention comprises gluten, the content may be 100 parts by weight or less or 50 parts by weight or less, with respect to 100 parts by weight of the mung bean protein in the soft cookie.

The invention further provides a soft cookie, wherein the soft cookie is gluten-free.

According to the invention it is possible to provide a soft cookie with an enjoyable soft mouthfeel, satisfactory chewability and easy solubility in the mouth, and satisfactory flavor. Also according to the invention, since it is possible to obtain a soft cookie with a soft mouthfeel without using large amounts of water or liquid materials, the manageability during production is excellent, it is easy to cook enough the interior of the soft cookie during baking, and the obtained soft cookie has excellent preservability. Furthermore, since the soft cookie of the invention can be produced without using gluten and contains mung bean-derived protein, it allows mung bean protein of high-nutritional-value to be ingested in large amounts in a convenient manner.

### Detailed Description of the Invention

### [Description of Embodiments]

The invention will now be explained in more specific detail, with the understanding that the invention is not limited to these embodiments.

The soft cookie of this embodiment comprises a mung bean protein and a sugar alcohol.

### (Mung bean protein)

The mung bean protein source used as the starting material for the mung bean protein may be a mung bean protein composition containing mung bean protein. The mung bean protein composition used may be mung bean milk or a composition of mung bean protein isolate, which may be utilized directly or after being dried, and these may also be utilized after being sterilized and dried. Mung bean milk can be obtained by extracting the protein components from whole mung beans or starch-removed mung beans using cold water or hot water, and removing the starch and dietary fiber components from the extracted solution. Additionally, it may be treated with a UF membrane (ultrafiltration membrane) to concentrate the protein components in the mung bean milk. A composition of mung bean protein isolate can be obtained by concentrating the protein using treatment such as isoelectric precipitation from mung bean milk. The mung bean protein composition may contain mung bean protein at 80 wt% or greater as the crude protein (CP) content with respect to the total solid content. Therefore, the whole mung bean or starch-removed mung bean used as the starting material for mung bean milk or the like may have a high protein content in the whole mung bean or starch-removed mung bean.

The composition of mung bean protein isolate can be prepared in the following manner, for example. Specifically, cold water or hot water is added to whole mung bean for immersion from about 10 hours to 30 hours, and after milling, extraction is performed near neutral pH and the seed coats and fiber are removed with a mesh. The starch is then separated out to obtain mung bean milk. The mung bean milk is then adjusted to near pH 3.5 to 5.5, and the isoelectric precipitate is collected as a composition of mung bean protein isolate. Water and an alkali agent are added to the collected precipitate for adjustment to a solid concentration of 5 to 15 wt% and near pH 5.7 to 8.0 or pH 6.8 to 7.5, to obtain an aqueous solution containing a composition of mung bean protein isolate. The composition of mung bean protein isolate obtained in this manner may be used directly as a solution for the following steps, or it may be used after drying the solution, or it may be used by re-dissolution after drying. When it is to be dried, a sterilizing step may be carried out before drying. The isoelectric precipitate may also be used after drying, without neutralization.

The amount of mung bean protein in the soft cookie may be 8 to 29 wt% or 11 to 23 wt% with respect to the total solid content of the soft cookie after baking. When the mung bean protein content is low the shape retention of the dough is weak, and when the content is high the dough shrinks before baking becoming difficult to manage, and becomes hard after baking resulting in a poor mouthfeel.

The method for measuring the concentration of mung bean protein in the soft cookie may be Western blotting. Specifically, a sample buffer containing SDS and a reducing agent such as 2-mercaptoethanol is added to the crushed sample, and extraction is performed in boiling water for 10 minutes. Next, mung bean protein adjusted in several different concentrations (controls) are used for SDS-PAGE simultaneously with the sample, and transfer to a PVDF (Polyvinylidene difluoride) membrane by a semi-dry method. Anti-mung bean protein antibody, as primary antibody, is reacted with the transferred membrane, and antibody labeled with AP (Alkaline phosphatase) or HRP (Horse radish peroxidase) is used as secondary antibody for reaction with the primary antibody, to allow quantitation of the mung bean protein based on coloration by enzyme activity or the like.

### (Sugar alcohol)

"Sugar alcohol" is a general term for a chain polyhydric alcohol obtained by reducing the carbonyl groups of a saccharide. When a sugar alcohol is used in a cookie, it is possible to obtain a soft cookie with a moist, soft mouthfeel. Also, since a sugar alcohol has lower water activity value than sucrose or starch syrup, using a sugar alcohol improves the preservability of the soft cookie.

Examples of sugar alcohols include C3-6 monosaccharide alcohols such as erythritol, xylitol, sorbitol and mannitol, oligosaccharide alcohols obtained by reducing oligosaccharides such as maltitol, lactitol or reduced palatinose, and reduced starch syrup or reduced saccarified starch obtained by reducing starch syrup with different saccharification degrees. Examples of reduced starch syrup that may be used include reduced maltose starch syrup obtained by reducing starch syrup having a high maltose proportion. Using reduced starch syrup or reduced saccarified compounds, among these, aid the process during forming because the viscosity is high. These sugar alcohols may be used alone or in combinations of two or more. The sugar alcohol content in a cookie may be 5 to 50 wt% or 20 to 35 wt%, with respect to the total solid content of the baked cookie. The sugar alcohol content is preferably within this range from the viewpoint of flavor and mouthfeel.

In addition to the aforementioned sugar alcohols, humectants such as liquid oils, liquid shortening, fructose, maltose, glucose-fructose syrup, high-fructose corn syrup, honey, starch syrup, processed starch, dry fruit paste or the like, or water, may also be added to the dough, or the amount of water added may be increased. The humectant addition or increase in water amount can impart a more moist, soft mouthfeel to the soft cookie.

The starting material to be used for preparation of the dough is not particularly restricted so long as it can be used as a starting material for soft cookies, in addition to the aforementioned components, and any starting material known in the prior art may be used as desired. For example, common starting materials including plastic fats such as butter, margarine or shortening, liquid oils, sweeteners, eggs, milk, soy milk, wheat flour, other grain flour, starch, processed starch, chocolate, dry fruit, nuts, vegetables, cocoa, coffee, dairy products, various expanding agents and various preservatives may be used. As sweeteners there may be used saccharides such as caster sugar, brown soft sugar, brown sugar, cane sugar, honey, maple syrup, agave syrup, molasses, starch syrup, glucose, fructose, maltose, sucrose, high-fructose corn syrup, oligosaccharides, fructooligosaccharides or inulin, artificial sweeteners such as aspartame, acesulfame potassium, sucralose, saccharin or neotame, or trehalose, licorice extract, stevia extract, Siraitia grosvenorii extract, thaumatin, glycerin, curculin, monellin or monatin. There may also be used additives known in the prior art, which are used in baked confectioneries.

Also, for health support, the starting material may be used in combination with materials including proteins such as soybean, other beans, soy milk powder, modified soy milk powder, soybean flour, defatted soybean flour, other bean flour, milk, whey and collagen, proteolysates or peptides, as well as ω-3 fats and oils, vitamins, minerals, polyphenols, astaxanthin, conjugated linoleic acid, water-soluble dietary fiber, insoluble dietary fiber, catechin, olive (leaf) polyphenols, resistant dextrin, cinnamon, lignan, isoflavone, phytosterols, acetylcysteine, white kidney bean extract, phaseolamin, arabinoxylan, phytic acid, (oolong tea) polyphenols, hercampure, Caiapo potato, glucomannan, chromium, mulberry leaf, onion, theaflavin, Houttuynia, vanadium, fenugreek, pectin, hop, polydextrose and egg yolk oil.

The soft cookie of this embodiment may also contain proteins other than mung bean protein, such as gluten, but the major protein may be mung bean protein. When the soft cookie contains gluten as a wheat protein, it may be at preferably no greater than 100 parts by weight or no greater than 50 parts by weight with respect to 100 parts by weight of the mung bean protein, or it may contain absolutely no gluten. The soft cookie of this embodiment can also be produced without using soft flour and gluten. It is thus possible to produce a soft cookie using absolutely no wheat, which is an allergenic substance, allowing it to be consumed by wheat allergy patients as well. The method of measuring the gluten concentration in the soft cookie may be ELISA, for example.

### (Method for producing soft cookie)

The method for preparing soft cookie dough is not particularly restricted, and there may be employed, for example, the sugar-batter method which is the most widely used method for preparing common cookie dough. In the sugar-batter method, a plastic fat such as margarine is kneaded with sugar, a moisture source such as water dissolving an expanding agent is added thereto, and finally powder materials are added.

The dough for the soft cookie of this embodiment can be prepared in the following manner, for example. When a plastic fat such as margarine and a powdered sweetener such as sugar are used, these starting materials are first mixed and stirred, and a sugar alcohol is added to them and stirring is continued. If necessary, water or another liquid starting material such as a humectant may be added with the sugar alcohol, or water dissolving an expanding agent may be added as well. Next, the dried composition of mung bean protein isolate is added and stirred with the mixture to obtain soft cookie dough. If necessary, another powdered starting material such as gluten may be added together with the composition of mung bean protein isolate. The expanding agent may also be added with the powdered starting material, without being dissolved in water. Also, to prevent separation between the fat or oil and the water, a portion of the powdered starting material including the composition of mung bean protein isolate may be added before adding the liquid starting material including the sugar alcohol.

Common cakes have light specific gravity for the dough by incorporating large quantities of air into the dough before baking, producing a fluffy mouthfeel. In the method for producing a soft cookie according to this embodiment, however, while stirring is carried out during the production steps, it is possible to obtain a soft mouthfeel without incorporating large quantities of air into the dough, unlike with cakes. The specific gravity of the dough of the soft cookie of this embodiment may be 0.5 to 1.3, or 0.6 to 1.2.

The dough of the soft cookie prepared by the method described above may be formed and baked to obtain a soft cookie according to this embodiment. The forming method may be, for example, a wire cutter method or squeezing method. The method of baking the formed dough may employ an oven such as is commonly used for baking of confectioneries. The baking conditions may be a baking temperature of 120°C to 230°C and a baking time of 5 to 60 minutes.

Common cookies having a crispy mouthfeel usually have a moisture content of less than 5 wt% after baking, while cakes such as sponge cake usually have a moisture content exceeding 30 wt%. The soft cookie of this embodiment is a "moderately moist" type, having a post-baking moisture content of 5% to 30%, 7% to 28% or 9% to 25% of the total soft cookie after baking.

### [Examples]

Examples of the invention will now be described, with the understanding that the technical scope of the invention is not limited by these examples.

### (Preparation of composition of mung bean protein isolate)

After adding 1 part by weight of whole mung bean to 5 parts by weight of water, it was immersed for 22 hours and the husks and embryonic areas were separated by an established method. Next, a colloid mill (product of Primix Corp.) was used for milling, the pH was adjusted to 8.5, extraction was performed at 50°C for 30 minutes while stirring with a homomixer (product of Primix Corp.), and centrifugal separation was carried out at 3,000 × g to remove the starch and obtain starch-removed mung bean milk. This was adjusted to pH 4.5 with hydrochloric acid for isoelectric precipitation, and subjected to centrifugal separation to obtain a precipitate as acid-precipitated curd. Water was added in a 4-fold amount to the acid-precipitated curd, and the pH was adjusted to 7.0 with sodium hydroxide to obtain a solution containing mung bean protein isolate. The obtained solution was heated at 120°C for 10 seconds each using a continuous direct-heating pasteurizer (product of Alfa Laval AB), and spray-drying was carried out with a spray drier to obtain a composition of mung bean protein isolate.

The protein content of the obtained composition of mung bean protein isolate was 83.2 wt% of the total solid content of the composition of mung bean protein isolate. For the protein content, the nitrogen content in the composition of mung bean protein isolate was measured using the Kjeldahl method, and the measured nitrogen content was multiplied by the nitrogen coefficient of 6.25 to calculate the crude protein content.

(Example 1, Comparative Examples 1 to 2) In order to confirm the difference in mouthfeel with and without a sugar alcohol, cookies were prepared comprising a composition of mung bean protein isolate obtained by the method described above, and the effect was examined in comparison. Cookies were prepared with a proportion including reduced saccarified starch as a sugar alcohol and a composition of mung bean protein isolate, in Example 1, a proportion including water and a composition of mung bean protein isolate in Comparative Example 1, and a proportion using a composition of mung bean protein isolate in ordinary sugar cookies, without water and a sugar alcohol, in Comparative Example 2. The starting material contents are shown in Table 1. The units for the mixing ratios in Table 1 are parts by weight.

Cookie dough was prepared by mixing margarine, cane sugar and maltose using a desktop mixer, and then adding starting materials 2 to 5 in the mixing order shown in Table 1, stirring the mixture each time to uniformity. The margarine used was "MESSAGE 500" (product of Fuji Oil Co., Ltd.), the cane sugar used was "KIBI SATO" (product of Nissin Sugar Co., Ltd.), the maltose used was "SANMALT S" (product of Hayashibara Co., Ltd.), the reduced saccarified starch used was "AMAMEAL" (product of Mitsubishi Shoji Foodtech Co., Ltd.), the soft flour used was "NISSHIN VIOLET" (product of Nisshin Seifun), and the ammonium bicarbonate used was a product of Happou Shoukai Co., Ltd.

**[Table 1]**

| Starting material | Mixing order | Example 1 | Comp. Ex. 1 | Comp. Ex. 2 |
|---|---|---|---|---|
| Margarine | 1 | 35.0 | 35.0 | 35.0 |
| Cane sugar | 1 | 35.0 | 35.0 | 35.0 |
| Maltose | 1 | 10.0 | 10.0 | 10.0 |
| Composition of mung bean protein isolate | 2 | 30.0 | 30.0 | 30.0 |
| Reduced saccarified starch | 3 | 50.0 | 0.0 | 0.0 |
| Water | 3 | 0.0 | 50.0 | 0.0 |
| Egg | 4 | 10.0 | 10.0 | 10.0 |
| Flour | 5 | 20.0 | 20.0 | 20.0 |
| Ammonium bicarbonate | 5 | 0.5 | 0.5 | 0.5 |
| Total | | 190.5 | 190.5 | 140.5 |

The prepared dough was formed into 10 g disc shapes and baked in an oven at 190°C for 13 minutes (Example 1), 15 minutes (Comparative Example 1) or 12 minutes (Comparative Example 2), to obtain cookies.

One day after baking, the mouthfeel and flavor of the obtained cookies were evaluated. The evaluation was conducted on a 4-level scale of A to D (A: Very good, B: Good, C: Fair, D: Poor). The results are shown in Table 2.

**[Table 2]**

| | Mouthfeel/flavor | Evaluation |
|---|---|---|
| Example 1 | Soft mouthfeel, satisfactory dissolution in mouth and chewability, palatable and not soggy | A |
| Comp. Ex. 1 | Soft dough, but soggy. | D |
| Comp. Ex. 2 | Hard mouthfeel, not a soft mouthfeel | D |

In Example 1, which combined a composition of mung bean protein isolate and a sugar alcohol, soft cookies with a soft mouthfeel and satisfactory chewability and dissolution in the mouth were obtained. The soft cookies had a palatable and not soggy mouthfeel, or in other words, they had a soft, low-moisture mouthfeel similar to baked or steamed chestnuts. Also, the soft cookies of Example 1 had excellent shape retention of the dough after baking. In Comparative Example 1 which comprises a composition of mung bean protein isolate with water and in Comparative Example 2 wherein a composition of mung bean protein isolate was added to ordinary sugar cookies, it was not possible to obtain soft cookies with a soft mouthfeel and satisfactory chewability.

(Example 2, Comparative Examples 3 to 6) Cookies were prepared to confirm differences in mouthfeel by different protein types, and the effects were examined in comparison. In Example 2 there was used the aforementioned composition of mung bean protein isolate, in Comparative Example 3 there was used a composition of soybean protein isolate ("FUJIPRO R" by Fuji Oil Co., Ltd.), in Comparative Example 4 there was used 7S globulin, a constituent component of soybean protein ("LIPOFF 700", product of Fuji Oil Co., Ltd.), in Comparative Example 5 there was used soft flour commonly used with baked confectioneries ("NISSHIN VIOLET" by Nisshin Seifun), and in Comparative Example 6 there was used a powdered wheat protein composition as the major protein of soft flour ("NAIBAKU Wheat Protein by Hokkoku Food Co., Ltd.). The starting material contents are shown in Table 3. The units for the mixing ratios in Table 3 are parts by weight. Each of the starting materials were mixed in the order listed in Table 3, similar to Example 1, to prepare cookie dough. The reduced maltose starch syrup used was "AMARTI SYRUP" (product of Mitsubishi Shoji Foodtech Co., Ltd.).

**[Table 3]**

| Starting material | Mixing order | Example 2 | Comp. Ex. 3 | Comp. Ex. 4 | Comp. Ex. 5 | Comp. Ex. 6 |
|---|---|---|---|---|---|---|
| Margarine | 1 | 37.5 | 37.5 | 37.5 | 37.5 | 37.5 |
| Cane sugar | 1 | 35.0 | 35.0 | 35.0 | 35.0 | 35.0 |
| Maltose | 1 | 20.0 | 20.0 | 20.0 | 20.0 | 20.0 |
| Composition of mung bean protein isolate | 2 | 30.0 | 0.0 | 0.0 | 0.0 | 0.0 |
| Composition of soybean protein isolate | 2 | 0.0 | 30.0 | 0.0 | 0.0 | 0.0 |
| 7S globulin | 2 | 0.0 | 0.0 | 30.0 | 0.0 | 0.0 |
| Flour | 2 | 0.0 | 0.0 | 0.0 | 30.0 | 0.0 |
| Powdered wheat protein composition | 2 | 0.0 | 0.0 | 0.0 | 0.0 | 30.0 |
| Reduced saccarified starch | 3 | 45.0 | 45.0 | 45.0 | 45.0 | 45.0 |
| Reduced maltose starch syrup | 3 | 12.5 | 12.5 | 12.5 | 12.5 | 12.5 |
| Water | 4 | 35.0 | 35.0 | 35.0 | 2.0 | 2.0 |
| Ammonium bicarbonate | 4 | 0.6 | 0.6 | 0.6 | 0.6 | 0.6 |
| Composition of mung bean protein isolate | 5 | 15.0 | 0.0 | 0.0 | 0.0 | 0.0 |
| Composition of soybean protein isolate | 5 | 0.0 | 15.0 | 0.0 | 0.0 | 0.0 |
| 7S globulin | 5 | 0.0 | 0.0 | 15.0 | 0.0 | 0.0 |
| Soft flour | 5 | 0.0 | 0.0 | 0.0 | 15.0 | 0.0 |
| Powdered wheat protein composition | 5 | 0.0 | 0.0 | 0.0 | 0.0 | 15.0 |
| Total | | 230.6 | 230.6 | 230.6 | 197.6 | 197.6 |

The prepared dough was squeezed and formed into 10 g disc shapes. These were baked for 13 minutes in an oven at 190°C to obtain cookies.

One day after baking, the moisture of the obtained cookies was measured and the mouthfeel and flavor were evaluated. The evaluation was conducted on a 4-level scale of A to D (A: Very good, B: Good, C: Fair, D: Poor). The results are shown in Table 4.

**[Table 4]**

| | Moisture (wt%) | Mouthfeel/flavor | Evaluation |
|---|---|---|---|
| Example 2 | 20.2 | Soft mouthfeel, satisfactory dissolution in mouth and chewability, chestnut-like flavor. Satisfactory shape retention of dough. | A |
| Comp. Ex. 3 | 22.4 | Hard mouthfeel, glutinous. Cereal-like odor. | C |
| Comp. Ex. 4 | 23.5 | Gel-like elasticity, rubber-like mouthfeel. | C |
| Comp. Ex. 5 | - | Reduced shape retention of dough, slackening. Considerable oil separation, sticky mouthfeel. | D |
| Comp. Ex. 6 | - | Reduced shape retention of dough. Hard crunchy mouthfeel. Animal-like odor. | D |

In Example 2 which contained a composition of mung bean protein isolate, it was possible to obtain soft cookies having a soft mouthfeel, satisfactory chewability and dissolution in the mouth, and a satisfactory palatable and not soggy flavor similar to chestnuts. Also, the soft cookies of Example 2 had no oil separation and excellent shape retention of the dough after baking. By using the composition of mung bean protein isolate it is possible to produce soft cookies containing no wheat flour or gluten and having a soft mouthfeel with satisfactory chewability, even without increasing the moisture content. In Comparative Examples 3 to 6 which used wheat flour or other protein materials instead of a composition of mung bean protein isolate, it was not possible to obtain soft cookies with a satisfactory palatable, soft, chewable mouthfeel. Also, in Comparative Examples 5 and 6 which used soft flour or gluten, the shape retention of the dough after baking was poor.

A breaking load test was conducted in order to evaluate the difference in cookie mouthfeel by protein type. Cookies prepared in the same manner as Example 2 and Comparative Examples 3 to 4 were used, except that forming was carried out by a wire cutter method to obtain a consistent size for the cookies after baking. The measurement was performed one day after baking. The breaking test was conducted using a Yamaden high-resolution creep meter (RHEONER, RE-33005). The plunger used was wedge-shaped (W13 × 30°, 1 mm width of tip), and measurement was performed setting the cookie so that the plunger approached the center of the cookie at a compression speed of 1 mm/sec. A 20 kgf load cell was used for load application. Measurement was performed on 10 samples for each example, and the average value was calculated. The height of each cookie sample was also measured. The results are shown in Table 5.

**[Table 5]**

| | Example 2 | Comp. Ex. 3 | Comp. Ex. 4 |
|---|---|---|---|
| Breaking load [gf) | 773 | 979 | 2683 |
| Breaking deformation [mm] | 3.12 | 7.56 | 19.81 |
| Height [mm] | 12.11 | 12.01 | 12.47 |

Upon analysis of the breaking test results for the cookies, the difference in breaking load was found to be a little for cookies when using a composition of mung bean protein isolate or when using a composition of soybean protein isolate. Also, with the cookies using 7S globulin, the breaking load increased significantly compared to using the composition of mung bean protein isolate or the composition of soybean protein isolate. The breaking deformation of the cookies was descending in the order of using 7S globulin, composition of soybean protein isolate and composition of mung bean protein isolate, with significant difference. No difference was found between the examples in terms of heights of the cookie samples used.

In order to confirm the relationship between composition of mung bean protein isolate content and mouthfeel, cookies were prepared and the effect was examined in comparison. The starting materials were mixed in the proportions listed in Table 6, and cookies were prepared in the same manner as Example 2. The units in Table 6 are parts by weight. The insoluble dietary fiber used was "FIBER JIMU RW" (product of Matsutani Chemical Industry Co., Ltd.). The baking temperature was 170°C, and baking was carried out for 12 to 17 minutes.

**[Table 6]**

| Starting material | Comp. Ex. 5 | Example 3 | Example 4 | Example 5 | Example 6 | Example 7 | Example 8 | Comp. Ex. 6 |
|---|---|---|---|---|---|---|---|---|
| Margarine | 35.0 | 35.0 | 37.5 | 37.5 | 35.0 | 35.0 | 30.0 | 30.0 |
| Cane sugar | 35.0 | 35.0 | 35.0 | 35.0 | 35.0 | 35.0 | 25.0 | 25.0 |
| Maltose | 10.0 | 10.0 | 20.0 | 20.0 | 10.0 | 10.0 | 10.0 | 10.0 |
| Composition of mung bean protein isolate | 10.0 | 15.0 | 20.0 | 30.0 | 40.0 | 45.0 | 45.0 | 45.0 |
| Reduced saccarified starch | 35.0 | 35.0 | 35.0 | 40.0 | 55.0 | 40.0 | 40.0 | 30.0 |
| Water | - | - | - | - | - | 20.0 | 30.0 | 40.0 |
| Ammonium bicarbonate | 0.30 | 0.30 | 0.30 | 0.40 | 0.40 | 0.40 | 0.40 | 0.40 |
| Insoluble dietary fiber | 15.0 | 25.0 | - | - | - | - | - | - |
| Total | 140.3 | 155.3 | 147.8 | 162.9 | 175.4 | 185.4 | 180.4 | 180.4 |

The post-baking moisture content of the obtained cookies was measured. An FD-600 infrared moisture meter (product of Kett Electric Laboratory) was used for the moisture content measurement, under conditions of 99°C for 99 minutes. The mouthfeel and flavor of the obtained cookies were also evaluated one day after baking. The evaluation was conducted on a 4-level scale of A to D (A: Very good, B: Good, C: Fair, D: Poor). The results are shown in Table 7. The mung bean protein content (wt%) was expressed as the crude protein content with respect to the total solid content of the cookies after baking.

**[Table 7]**

| | Mung bean protein content (wt%) | Post-baking moisture content (wt%) | Mouthfeel/flavor | Evaluation |
|---|---|---|---|---|
| Comp. Ex. 5 | 6.7 | 4.3 | Slackening of dough, hard crunchy mouthfeel. | D |
| Example 3 | 8.9 | 7.2 | Slightly hard, but satisfactory soft chewability and palatable and not soggy mouthfeel. | B |
| Example 4 | 12.6 | 8.1 | Soft and chewable, highly palatable and not soggy mouthfeel. | A |
| Example 5 | 17.1 | 9.3 | Soft and chewable, highly palatable and not soggy mouthfeel. | A |
| Example 6 | 21.6 | 10.1 | Soft and chewable, highly palatable and not soggy mouthfeel. | A |
| Example 7 | 25.2 | 16.8 | Soft and chewable, palatable and not soggy mouthfeel. | B |
| Example 8 | 28.0 | 20.3 | Slightly hard, but satisfactory soft chewability and palatable and not soggy mouthfeel. | B |
| Comp. Ex. 6 | 29.6 | 21.8 | Elasticity, with hard mouthfeel. | D |

In Examples 3 to 8, soft cookies with a palatable and not soggy, soft mouthfeel and chewability were obtained. Also, the dough obtained in Examples 3 to 8 had satisfactory shape retention, without slackening of the dough after baking. Thus, adding a composition of mung bean protein isolate at 8 to 29 wt% of the total solid content of the soft cookies after baking yielded soft cookies with a soft mouthfeel and satisfactory chewability.

In order to confirm the relationship between mung bean protein and gluten content of the cookies and mouthfeel, cookies were prepared and the effect was examined in comparison. The gluten used was a powdered wheat protein composition. Cookies were prepared in the same manner as Example 2, except that a composition of mung bean protein isolate and a powdered wheat protein composition were added in the proportions listed in Table 8. The gluten content of the total solid content of the powdered wheat protein composition was 77 wt%, as crude protein. One day after baking, the mouthfeel and flavor of the obtained cookies were evaluated. The evaluation was conducted on a 4-level scale of A to D (A: Very good, B: Good, C: Fair, D: Poor). The moisture content of the cookies after baking was also measured in the same manner as Example 2. The protein composition contents (wt%) in Table 8 are expressed as percentages with respect to the total starting material, ignoring the moisture content of the dough.

**[Table 8]**

| | Mung bean protein isolate composition content (wt%) | Powdered wheat protein composition content (wt%) | Post-baking moisture content (wt%) | Mouthfeel/flavor | Evaluation |
|---|---|---|---|---|---|
| Example 9 | 25.9 | 0 | 14.1 | Soft and chewable, highly palatable and not soggy mouthfeel. | A |
| Example 10 | 17.3 | 8.6 | 17.3 | Soft and chewable, highly palatable and not soggy mouthfeel. | A |
| Example 11 | 13.0 | 13.0 | 12.9 | Soft and chewable, palatable and not soggy mouthfeel. | B |
| Comp. Ex. 7 | 8.6 | 17.3 | 7.9 | Hard mouthfeel. | D |

When absolutely no gluten was included, or when gluten was present in an amount of about half of the mung bean protein, soft cookies with satisfactory softness and chewability and a very palatable and not soggy mouthfeel were obtained. When gluten was present at about the same weight as the mung bean protein, soft cookies with satisfactory softness and chewability and a palatable and not soggy mouthfeel were obtained. Even when gluten was used at not more than the same weight as the mung bean protein, soft cookies with a soft mouthfeel and satisfactory chewability were obtained.

## Claims

1. A soft cookie comprising a mung bean protein and a sugar alcohol, wherein the mung bean protein content is 8 to 29 wt% of the total solid content.

2. The soft cookie according to claim 1, wherein the soft cookie further comprises no greater than 100 parts of gluten by weight with respect to 100 parts by weight of the mung bean protein.

3. The soft cookie according to claim 1, wherein the soft cookie further comprises no greater than 50 parts of gluten by weight with respect to 100 parts by weight of the mung bean protein.

4. The soft cookie according to claim 1, wherein the soft cookie is gluten-free.
